# EUROPEAN PATENT APPLICATION

(11) **EP 4 155 009 A1**
(43) Date of publication of application: **29.03.2023**
(21) Application number: 21807909.3
(22) Date of filing: 26.04.2021
(51) Int. Cl.: B22F 5/00, B33Y 10/00, B33Y 30/00, B29C 64/209, B29C 64/236, B29C 64/268, B29C 64/371, B22F 3/105, B22F 3/16, B22F 10/25, B22F 10/32, B22F 12/47

(54) **AM DEVICE AND AM METHOD**

(30) Priority: 20.05.2020 JP 2020088239; 14.08.2020 JP 2020137004
(71) Applicant: Ebara Corporation, Tokyo 144-8510 (JP)
(72) Inventor: SHINOZAKI, Hiroyuki, Tokyo 144-8510 (JP); SHIMMURA, Tomoyo, Tokyo 144-8510 (JP)
(74) Representative: Klang, Alexander H.
(86) International application number: PCT/JP2021/016604
(87) International publication number: WO 2021/235182

(57) **Abstract**

Provided is a technique for fabricating a powder material bedded in advance using a DED nozzle.

According to one embodiment, there is provided an AM apparatus for manufacturing a fabricated object. The AM apparatus includes a DED nozzle. The DED nozzle includes: a DED nozzle main body; a laser port disposed at a distal end of the DED nozzle main body and for emitting a laser beam, and a laser passage configured to communicate with the laser port and for allowing the laser beam to pass through the DED nozzle main body; and a powder port disposed at the distal end of the DED nozzle main body and for emitting a powder material, and a powder passage configured to communicate with the powder port and for allowing the powder material to pass through the DED nozzle main body. The AM apparatus further includes a cover configured to surround a peripheral area of the laser port and the powder port of the DED nozzle. The cover is configured to have an opened downstream side in an emission direction of the laser beam. The cover includes a gas supply passage for supplying a gas inside the cover. The gas supply passage is configured to be oriented so as to guide the gas toward the DED nozzle main body.

## Description

### TECHNICAL FIELD

This application relates to an AM apparatus and an AM method. This application claims priority from Japanese Patent Application No. 2020-88239 filed on May 20, 2020. This application also claims priority from Japanese Patent Application No. 2020-137004 filed on August 14, 2020. The entire disclosures including the descriptions, the claims, the drawings, and the abstracts in Japanese Patent Application No. 2020-88239 and Japanese Patent Application No. 2020-137004 are herein incorporated by reference.

### BACKGROUND ART

There has been known a technique that directly fabricates a three-dimensional object from three-dimensional data, representing the three-dimensional object, on a computer. For example, there have been known Additive Manufacturing (AM) methods. As one example, there is Direct Energy Deposition (DED) as a deposition type AM method. The DED is a fabrication technique that, while locally supplying a metallic material, melts the metallic material together with a base material using an appropriate heat source, and solidifies them. As one example of the AM methods, there is also powder bed fusion (PBF). The PBF irradiates a part to be fabricated on two-dimensionally bedded metallic powder with a laser beam or an electron beam as a heat source, and melts and solidifies or sinters the metallic powder to fabricate each layer of a three-dimensional object. The PBF repeats such a process to ensure fabricating a desired three-dimensional object.

### CITATION LIST

### PATENT LITERATURE

PTL 1: U.S. Patent No. 4724299
PTL 2: Japanese Unexamined Patent Application Publication (Translation of PCT Application) No. 2019-500246

### SUMMARY OF INVENTION

### TECHNICAL PROBLEM

It is also possible to fabricate each layer of a three-dimensional object by irradiating metallic powder with a laser beam using a DED nozzle after the metallic powder has been two-dimensionally bedded as with the PBF. However, in such a case, the DED nozzle generally fabricates the three-dimensional object while supplying powder as a material or a gas, which blows the metallic powder bedded in advance away, and therefore, makes the planned fabrication difficult. One of the objects of this application is to provide a technique for fabricating a powder material bedded in advance using a DED nozzle.

In the case of the above-described DED or PBF fabrication, the vicinity of a fabrication position is sometimes purged with an inert gas in order to decrease an oxygen concentration in the fabrication position. If a flow rate of the purge gas is large then, for example, it may disturb a flow of material powder and a carrier gas by the DED to cause unstable fabrication. If the purge gas is used in the PBF, it sometimes blows material powder bedded in advance away, and therefore, makes the planned fabrication difficult. Meanwhile, if the flow rate of the purge gas is small, it sometimes fails to sufficiently eliminate oxygen in the fabrication position. One of the objects of this application is to provide a structure of an AM apparatus for sufficiently decreasing an oxygen concentration in a fabrication position while appropriately maintaining a flow rate of a purge gas during fabrication by an AM method.

### SOLUTION TO PROBLEM

According to one embodiment, there is provided an AM apparatus for manufacturing a fabricated object. The AM apparatus includes a DED nozzle. The DED nozzle includes: a DED nozzle main body; a laser port disposed at a distal end of the DED nozzle main body and a laser passage configured to communicate with the laser port, the laser port being for emitting a laser beam, the laser passage being for allowing the laser beam to pass through the DED nozzle main body; and a powder port disposed at the distal end of the DED nozzle main body and a powder passage configured to communicate with the powder port, the powder port being for emitting a powder material, the powder passage being for allowing the powder material to pass through the DED nozzle main body. The AM apparatus further includes a cover configured to surround a peripheral area of the laser port and the powder port of the DED nozzle, and the cover is configured to have an opened downstream side in an emission direction of the laser beam. The cover includes a gas supply passage for supplying a gas inside the cover, and the gas supply passage is configured to be oriented so as to guide the gas toward the DED nozzle main body.

There is provided an AM apparatus for manufacturing a fabricated object. The AM apparatus includes a DED nozzle. The DED nozzle includes: a DED nozzle main body; a laser port disposed at a distal end of the DED nozzle main body and a laser passage configured to communicate with the laser port, the laser port being for emitting a laser beam, the laser passage being for allowing the laser beam to pass through the DED nozzle main body; and a powder port disposed at the distal end of the DED nozzle main body and a powder passage configured to communicate with the powder port, the powder port being for emitting a powder material, the powder passage being for allowing the powder material to pass through the DED nozzle main body. The AM apparatus further includes a cover configured to surround a peripheral area of the laser port and the powder port of the DED nozzle, and the cover is configured to have an opened downstream side in an emission direction of the laser beam. The cover includes a gas supply passage for supplying a gas inside the cover, and the gas supply passage is configured to be oriented so as to guide the gas toward the DED nozzle main body as a whole, the gas supply passage including a lattice structure layer.

### BRIEF DESCRIPTION OF DRAWINGS

Fig. 1 is a drawing schematically illustrating an AM apparatus for manufacturing a fabricated object according to one embodiment.
Fig. 2 is a drawing schematically illustrating a cross-sectional surface of a DED nozzle according to one embodiment.
Fig. 3 is a drawing schematically illustrating a cross-sectional surface of the DED nozzle according to one embodiment.
Fig. 4 is a schematic diagram of a cover illustrated in Fig. 3, viewed from above.
Fig. 5 is a schematic diagram of a cover according to one embodiment, viewed from above.
Fig. 6 is a cross-sectional view illustrating a cover according to one embodiment.
Fig. 7 is a cross-sectional view illustrating a cover according to one embodiment.
Fig. 8 is a top view schematically illustrating the AM apparatus according to one embodiment.
Fig. 9 is a flowchart illustrating a method for fabricating with the AM apparatus according to one embodiment.
Fig. 10 is a side view schematically illustrating a state when an outline is fabricated with the AM apparatus according to one embodiment.
Fig. 11 is a side view schematically illustrating a state when a powder material is supplied inside the outline according to one embodiment.
Fig. 12 is a side view schematically illustrating a state when an upper surface of the supplied material powder is fabricated according to one embodiment.
Fig. 13 is a cross-sectional view schematically illustrating a fabricated object fabricated with the AM apparatus according to one embodiment.
Fig. 14 is a drawing schematically illustrating an AM apparatus for manufacturing a fabricated object according to one embodiment.
Fig. 15 is a drawing schematically illustrating a cross-sectional surface of a DED nozzle according to one embodiment.
Fig. 16 is a drawing schematically illustrating a cross-sectional surface of a cover mounted on the DED nozzle according to one embodiment.
Fig. 17 is a perspective view of the cover illustrated in Fig. 16, viewed from obliquely above.
Fig. 18 is a top view of a part of the cover illustrated in Fig. 16, viewed from above.
Fig. 19 is a perspective view illustrating an inner cover according to one embodiment alone.

### DESCRIPTION OF EMBODIMENTS

The following describes embodiments of an AM apparatus for manufacturing a fabricated object according to the present invention with the attached drawings. In the attached drawings, identical or similar reference numerals are attached to identical or similar components, and overlapping description regarding the identical or similar components may be omitted in the description of the respective embodiments. Features illustrated in the respective embodiments are applicable to other embodiments in so far as they are consistent with one another.

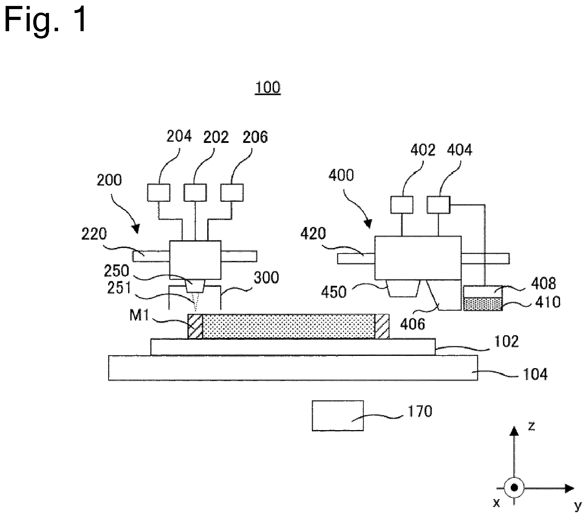

Fig. 1 is a drawing schematically illustrating an AM apparatus for manufacturing a fabricated object according to one embodiment. As illustrated in Fig. 1, an AM apparatus 100 includes a baseplate 102. On the baseplate 102, a fabricated object M is to be fabricated. The baseplate 102 can be a plate formed of any material that can support the fabricated object M. In one embodiment, the baseplate 102 is disposed on an XY-stage 104. The XY-stage 104 is a stage 104 movable in perpendicular two directions (x-direction, y-direction) on a horizontal surface. Note that the XY-stage 104 may be coupled to a lift mechanism movable in a height direction (z-direction). In one embodiment, the XY-stage 104 is not necessary.

In one embodiment, as illustrated in Fig. 1, the AM apparatus 100 includes a DED head 200. The DED head 200 is connected to a laser source 202, a material powder source 204, and a gas source 206. The DED head 200 has a DED nozzle 250. The DED nozzle 250 is configured to inject a laser, material powder, and a gas from the laser source 202, the material powder source 204, and the gas source 206. In one embodiment, as illustrated in Fig. 1, a cover 300 is mounted on the DED nozzle 250. The cover 300 is configured to surround a peripheral area of an injection port of the DED nozzle 250.

Any DED head can be employed for the DED head 200, and for example, a known DED head can be used. The DED head 200 is coupled to a moving mechanism 220, and thus, is configured to be movable. Any mechanism can be employed for the moving mechanism 220, and for example, a mechanism that can move the DED head 200 along a certain axis, such as a rail, may be employed, or the moving mechanism 220 may be configured of a robot that can move the DED head 200 to any position and in any direction. As one embodiment, the moving mechanism 220 can be configured to allow the DED head 200 to move along perpendicular three axes.

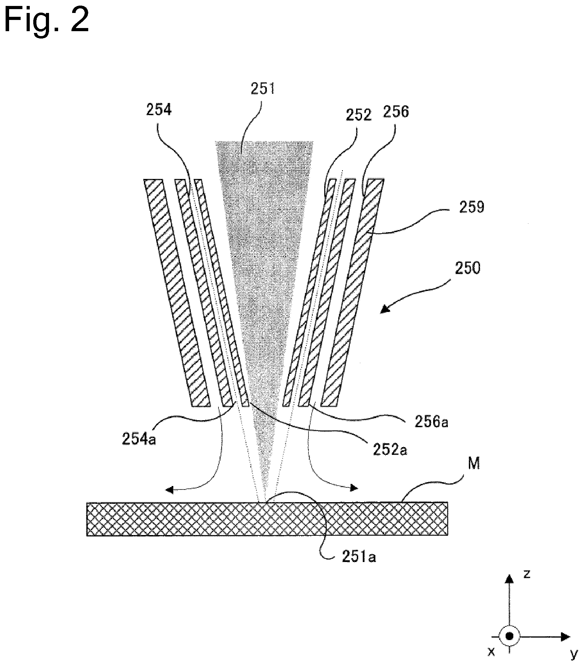

Fig. 2 is a drawing schematically illustrating a cross-sectional surface of the DED nozzle 250 according to one embodiment. The DED nozzle 250 according to the illustrated embodiment is a DED nozzle main body 259 in a truncated cone shape as a whole. The DED nozzle 250 according to the illustrated embodiment includes a first passage 252 through which a laser 251 passes in the center of the DED nozzle main body 259. The laser that has passed through the first passage 252 is discharged from a laser port 252a of the DED nozzle main body 259. The DED nozzle main body 259 includes a second passage 254 through which the material powder and a carrier gas for transporting the material powder pass outside the first passage 252. The material powder that has passed through the second passage 254 is discharged from a powder port 254a. Furthermore, the DED nozzle main body 259 includes a third passage 256 through which a shield gas passes outside the second passage 254. The shield gas that has passed through the third passage 256 is discharged from a gas port 256a.

The second passage 254 is configured to converge the material powder discharged from the DED nozzle 250 to a position substantially identical to a position of a focal point 251a of the laser 251. Note that, in Fig. 2, a flow of the material powder and the carrier gas is indicated by dashed lines. The carrier gas can be an inert gas, such as an argon gas and a nitrogen gas. It is more preferred to use the argon gas, which is heavier than the air, for the carrier gas. Note that using the inert gas for the carrier gas ensures inhibiting a molten pool formed of the molten material powder from being oxidized by covering the molten pool with the inert gas. However, the flow of the carrier gas discharged from the powder port 254a sometimes entrains the air surrounding the carrier gas. Therefore, the DED nozzle 250 illustrated in Fig. 2 supplies the shield gas at a low speed from the third passage 256 disposed outside the second passage 254 from which the powder material and the carrier gas are discharged to ensure inhibiting the surrounding air from being entrained. Inhibiting the surrounding air (in particular, oxygen) from being entrained by the carrier gas ensures suppressing the generation of a metal oxide film during fabricating and forming a molten pool with excellent wettability. In Fig. 2, a flow of the shield gas is indicated by arrows.

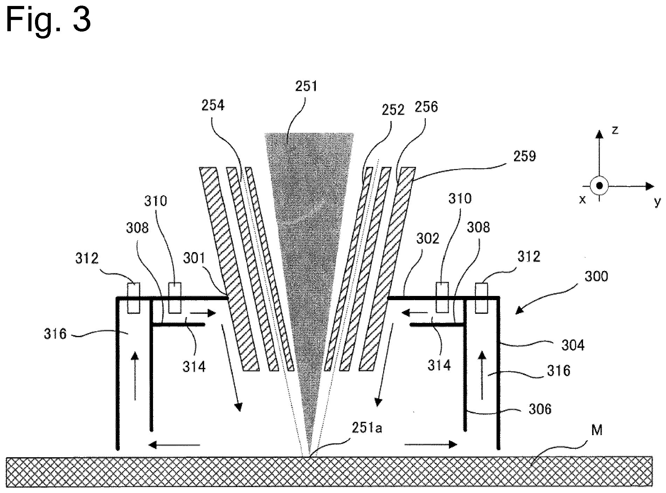

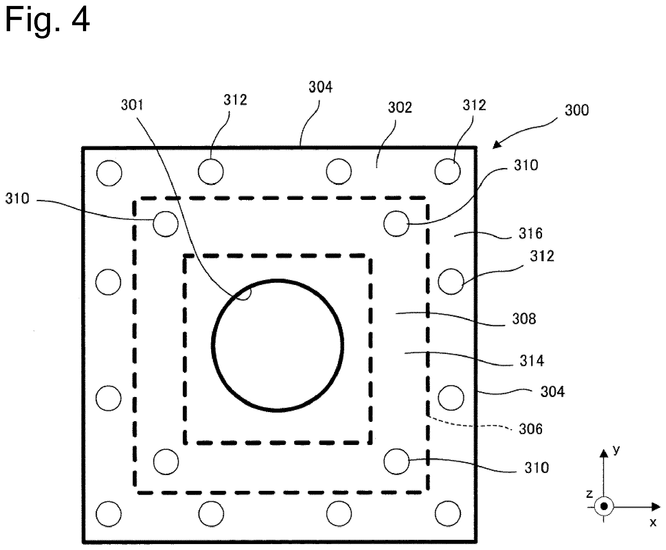

Fig. 3 is a drawing schematically illustrating a cross-sectional surface of the DED nozzle 250 according to one embodiment. The DED nozzle 250 illustrated in Fig. 3 is the DED nozzle 250 illustrated in Fig. 2 with the cover 300. Fig. 4 is a schematic diagram of the cover 300 illustrated in Fig. 3, viewed from above. In Fig. 4, the DED nozzle 250 is omitted for clarifying the illustration.

As illustrated in Fig. 3, the cover 300 covers a side surface of a distal end of the DED nozzle 250, and is in a shape with an opened lower side. As illustrated in Fig. 3, the cover 300 includes an outer wall 304 that extends downward from an upper surface 302 and an end of the upper surface 302. As illustrated in Fig. 3, the DED nozzle 250 has the distal end that passes through a center hole 301 formed in the proximity of the center of the upper surface 302 of the cover 300 and is thus positioned inside the cover 300. That is, the laser, the powder material, and the gas that has passed through the DED nozzle 250 are discharged inside the cover 300. The outer wall 304 has a lower end configured to have a height approximately the same as the focal point 251a of the laser of the DED nozzle 250.

The cover 300 according to the embodiment illustrated in Fig. 3 includes a vertical inner wall 306, extending downward from the upper surface 302, inside the outer wall 304. The cover 300 also includes a lateral inner wall 308 inwardly extending in parallel with the upper surface 302 from the vertical inner wall 306 at a lower side of the upper surface 302. As illustrated in Fig. 3, gas supply ports 310 are disposed immediately inside the vertical inner wall 306 on the upper surface 302. In one embodiment, as illustrated in Fig. 4, the plurality of gas supply ports 310 are disposed so as to surround the DED nozzle 250. The cover 300 also includes gas discharge ports 312 immediately outside the vertical inner wall 306 on the upper surface 302. In one embodiment, as illustrated in Fig. 4, the plurality of gas discharge ports 312 are disposed so as to surround the DED nozzle 250. The gas supply ports 310 are connected to a gas supply source, and the gas can be supplied inside the cover 300 from the gas supply ports 310. The supplied gas can be an inert gas, such as an argon gas and a nitrogen gas. The same gas supply source as the gas source 206 supplied from the above-described DED nozzle 250 may be used for the gas supply source to the gas supply ports 310.

In the embodiment illustrated in Fig. 3, the gas supplied inside the cover 300 from the gas supply ports 310 is guided toward the DED nozzle 250 through a gas supply passage 314 defined by the upper surface 302, the vertical inner wall 306, and the lateral inner wall 308. While in the embodiment illustrated in Fig. 3, the gas supply passage 314 is parallel to the upper surface 302 of the cover 300, the gas supply passage 314 does not necessarily have to be parallel to the upper surface 302 as long as it mostly approaches the DED nozzle main body 259 as another embodiment. The gas that has passed through the gas supply passage 314 hits the DED nozzle main body 259 to flow toward a distal end of the DED nozzle main body 259. The gas that has flown toward the distal end of the DED nozzle main body 259 heads for the fabrication target M and flows outward along the fabrication target M. The gas that has flown outward along the fabrication target M hits the outer wall 304 of the cover 300, and flows upward from there to be discharged from the gas discharge ports 312 through a gas discharge passage 316 defined by the outer wall 304 and the vertical inner wall 306.

In the embodiment illustrated in Fig. 3, a portion fabricated by being irradiated with the laser 251 from the DED nozzle 250 can be filled with the inert gas because of the cover 300, and thus, the fabricated portion can be inhibited from being oxidized. In addition, since a region filled with the inert gas can be limited within the cover 300, the usage of the inert gas can be suppressed.

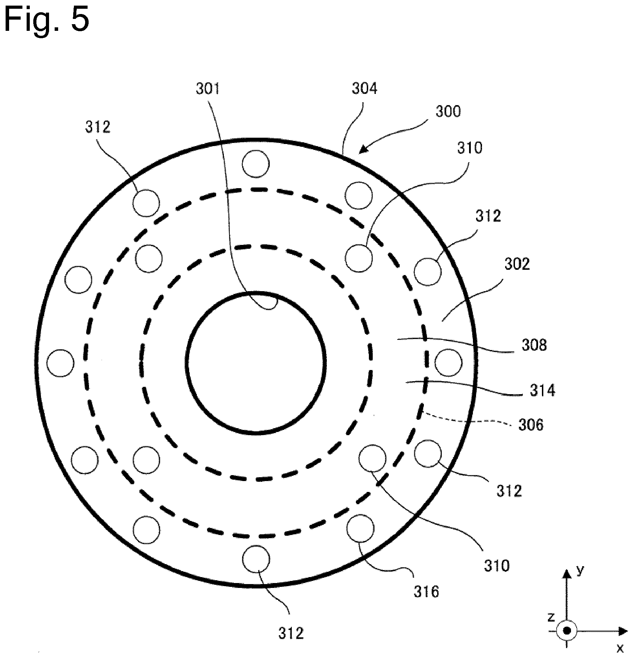

Fig. 5 is a schematic diagram of the cover 300 according to one embodiment, viewed from above. While the cover 300 illustrated in Fig. 5 is different from the cover illustrated in Fig. 4 in that the upper surface 302 is in a circular shape, the others have structures substantially similar to those illustrated in Fig. 3 and Fig. 4. In the cover 300 illustrated in Fig. 5, similar reference numerals are attached to components similar to those in the cover illustrated in Fig. 4, and therefore, the detailed descriptions are omitted. Note that, in Figs. 4 and 5, the numbers and the arrangements of the gas supply ports 310 and the gas discharge ports 312 are exemplarily illustrated, and any numbers and arrangements are allowed.

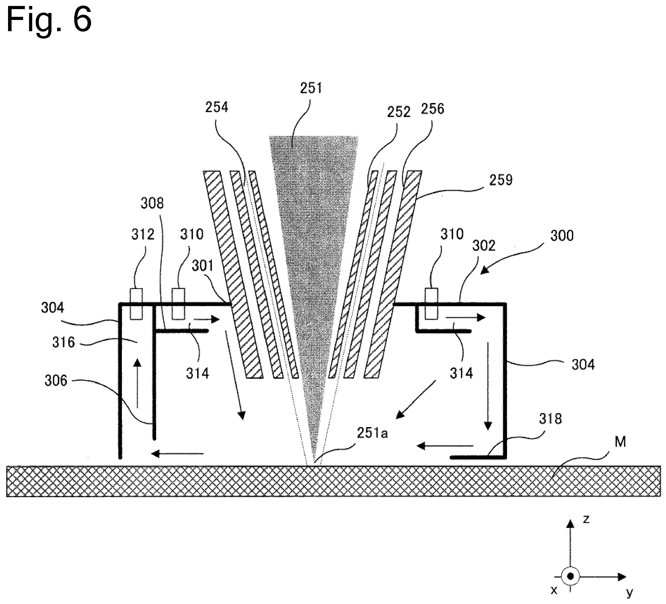

Fig. 6 is a cross-sectional view illustrating the cover 300 according to one embodiment. The cover 300 according to the embodiment illustrated in Fig. 6 includes, in a part (a left side in Fig. 6), the gas supply passage 314 that inwardly guides the gas supplied from the gas supply ports 310 toward the DED nozzle main body 259, similarly to the cover 300 in Fig. 3. The cover 300 illustrated in Fig. 6 also includes, in a part (a right side in Fig. 6), the gas supply passage 314 that guides the gas supplied from the gas supply ports 310 toward the outer wall 304. As illustrated in Fig. 6, the gas guided toward the outer wall 304 heads downward along the outer wall 304, and furthermore, is guided inward along an outer wall extending portion 318 extending toward the inside from an end of the outer wall 304. In the cover 300 illustrated in Fig. 6, the upper surface 302 may be in a square shape or in a circular shape.

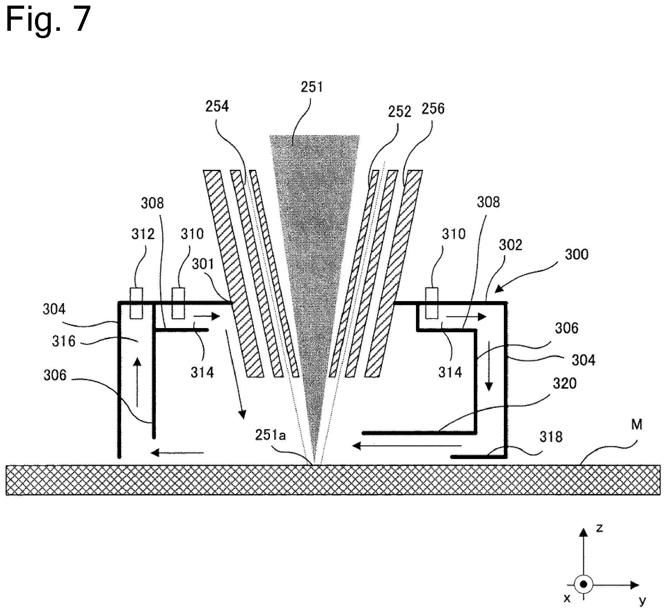

Fig. 7 is a cross-sectional view illustrating the cover 300 according to one embodiment. The cover 300 according to the embodiment illustrated in Fig. 7 includes, in a part (a left side in Fig. 7), the gas supply passage 314 that inwardly guides the gas supplied from the gas supply ports 310 toward the DED nozzle 250, similarly to the cover 300 in Fig. 3. The cover 300 illustrated in Fig. 7 includes, in a part (a right side in Fig. 7), the gas supply passage 314 that guides the gas supplied from the gas supply ports 310 toward the outer wall 304. The gas guided toward the outer wall 304 is guided downward through the inside of the outer wall 304 of the cover 300 by the outer wall 304, the vertical inner wall 306, the outer wall extending portion 318, and a vertical inner wall extending portion 320 extending toward the inside from a distal end of the vertical inner wall 306 of the cover 300, and furthermore, is guided to the focal point 251a of the laser of the DED nozzle 250 through the inside of the outer wall extending portion 318 and the vertical inner wall extending portion 320.

In one embodiment, as illustrated in Fig. 1, the AM apparatus 100 includes a powder supply head 400 for supplying a material for the fabrication target. The powder supply head 400 includes a material supply nozzle 450 for discharging powder as the material for the fabrication target, such as metallic powder. The material supply nozzle 450 is connected to a supply source 402 of the powder as the material for the fabrication target and a gas source 404. Therefore, the material powder and the gas can be supplied from the material supply nozzle 450. The gas supplied together with the material powder from the material supply nozzle 450 is preferred to be an inert gas, and more preferred to be an inert gas heavier than the air. For example, an argon gas can be employed as the inert gas. Employing the inert gas heavier than the air ensures filling a gap in the material powder supplied from the material supply nozzle 450 with the inert gas. Therefore, the oxidation of the fabricated object can be suppressed during fabrication by the laser irradiation.

As illustrated in Fig. 1, the powder supply head 400 may include a blade 406 for smoothing the supplied material powder. The blade 406 is disposed behind the material supply nozzle 450 in relation to a moving direction (a left direction in Fig. 1) of the powder supply head 400 when the material powder is supplied.

As illustrated in Fig. 1, the powder supply head 400 includes a gas supply nozzle 408 for supplying the inert gas over the supplied material powder. A flow rate of the gas supplied from the gas supply nozzle 408 is preferred to be a flow rate as small as not to blow the supplied material powder away.

In one embodiment, the powder supply head 400 includes a porous body 410 that covers a gas supply port of the gas supply nozzle 408. Therefore, the inert gas supplied from the gas supply nozzle 408 is slowly supplied over the supplied material powder through the porous body 410, which can suppress the material powder being blown away. The hole diameter and the thickness of the porous body 410 are set so as to supply the gas in a uniformly and finely dispersed manner from the porous body 410. In one embodiment, the average hole diameter of the porous body 410 is preferred to be 1/2 or less of the average grain diameter of the material powder, and is more preferred to be 1/10 or less. In one embodiment, a commercially available porous body can be used for the porous body 410, and for example, porous ceramics sold by Nippon Tungsten Co., Ltd. can be used as one example.

In one embodiment, the porous body 410 can have a lower surface approximately as high as a lower surface of the blade 406. The lower surface of the porous body 410 having approximately the same height as that of the lower surface of the blade 406 ensures further smoothing the material powder with the gas supplied from the porous body 410 in a noncontacting manner after smoothing the supplied material powder with the blade 406. In this case, since the porous body 410 does not contact with the material powder, the porous body 410 can have a lengthened service life. Note that, while in the embodiment in Fig. 1, the lower surface of the porous body 410 is approximately as high as the lower surface of the blade 406, the lower surface of the porous body 410 may be at a position higher than the lower surface of the blade 406 as another embodiment.

Note that the inert gas supplied from the gas supply nozzle 408 can be, for example, an argon gas, which is heavier than the air. Supplying the inert gas heavier than the air over the supplied material powder ensures lowering the concentration of oxygen remaining in layers of the material powder, and also ensures covering the supplied material powder with the inert gas, thereby ensuring suppressed oxidation of the fabricated object during fabrication.

Any powder supply head including the above-described features can be employed for the powder supply head 400, and for example, a known powder supply head can be used. The powder supply head 400 is coupled to a moving mechanism 420, and thus, is configured to be movable. Any mechanism can be employed for the moving mechanism 420, and for example, a mechanism that can move the powder supply head 400 along a certain axis, such as a rail, may be employed, or the moving mechanism 420 may be configured of a robot that can move the powder supply head 400 to any position and in any direction.

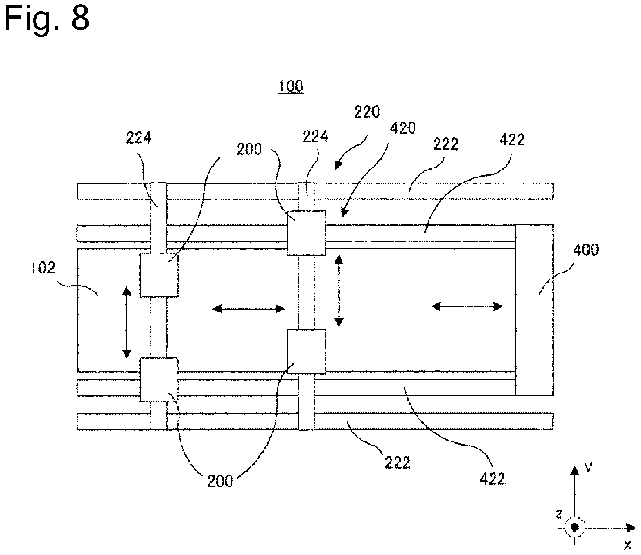

Fig. 8 is a top view schematically illustrating the AM apparatus 100 according to one embodiment. In particular, Fig. 8 schematically illustrates the moving mechanisms of the DED head 200 and the powder supply head 400. In the embodiment illustrated in Fig. 8, the moving mechanism of the DED head 200 is configured to allow the DED head 200 to move along the perpendicular three axes. In the embodiment illustrated in Fig. 8, the moving mechanism 220 of the DED head 200 includes a first rail 222 extending along an x-axis and a second rail 224 extending along a y-axis. The second rail 224 is mounted on the first rail 222 so as to be movable on the first rail 222. The DED head 200 is mounted on the second rail 224 so as to be movable on the second rail 224. Accordingly, the DED head 200 is movable to any position on an xy-plane parallel to the baseplate 102. The DED head 200 is configured to be movable in a z-direction, and the height of the DED head 200 is adjustable with respect to the baseplate 102.

In the embodiment in Fig. 8, two second rails 224 on which two DED heads 200 are mounted are mounted on the first rails 222. The number of the DED heads 200 in Fig. 8 is exemplarily illustrated, and any number of the DED heads 200 may be used on the AM apparatus 100. When the plurality of DED heads 200 are used, the same DED heads 200 may be used or different DED heads 200 may be used.

In one embodiment, as illustrated in Fig. 8, the moving mechanism 420 of the powder supply head 400 includes a third rail 422 extending along the x-axis. The powder supply head 400 is mounted on the third rail 422 so as to be movable on the third rail 422. Supplying the material powder from the powder supply head 400 while moving on the third rail 422 ensures supplying the material powder to any position on the baseplate 102.

The AM apparatus 100 according to one embodiment has a control device 170 as illustrated in Fig. 1. The control device 170 is configured to control operations of various kinds of operational mechanisms of the AM apparatus 100, such as the DED head 200, the powder supply head 400, and various kinds of operational mechanisms 220, 420, described above. The control device 170 can be configured of a general computer or a specialized computer.

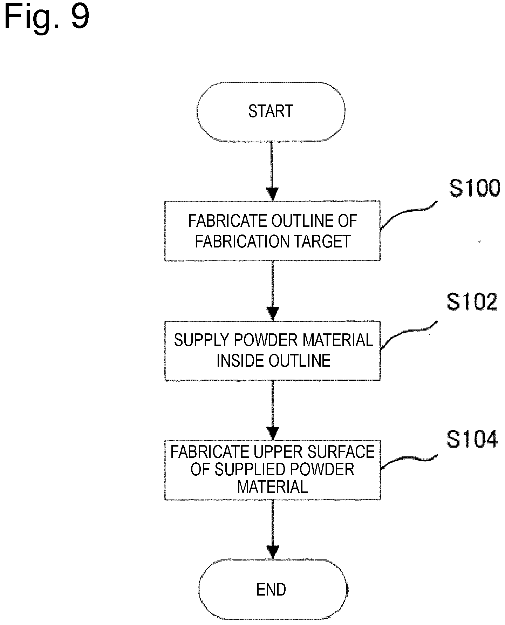

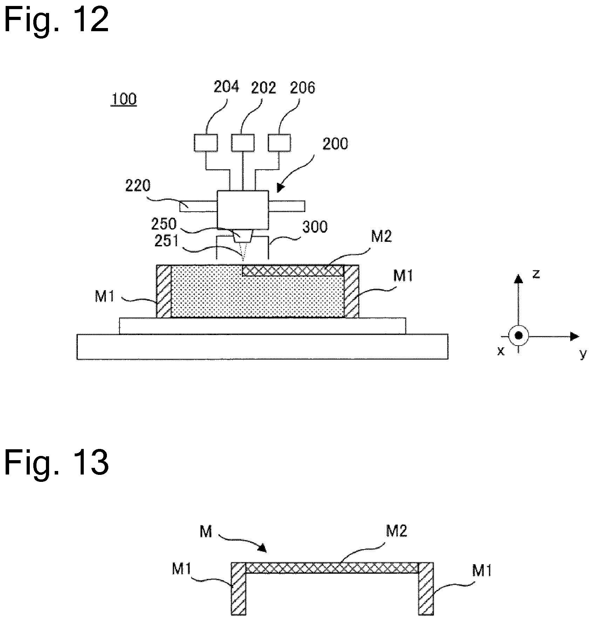

Fig. 9 is a flowchart illustrating a method for fabricating with the AM apparatus according to one embodiment. In one embodiment, with the method disclosed herein, the fabricated object M internally having a cavity, as illustrated in Fig. 13, can be fabricated. The fabricated object illustrated in Fig. 13 has a structure having an outline M1 and an upper lid M2 that bridges a gap in the outline M1.

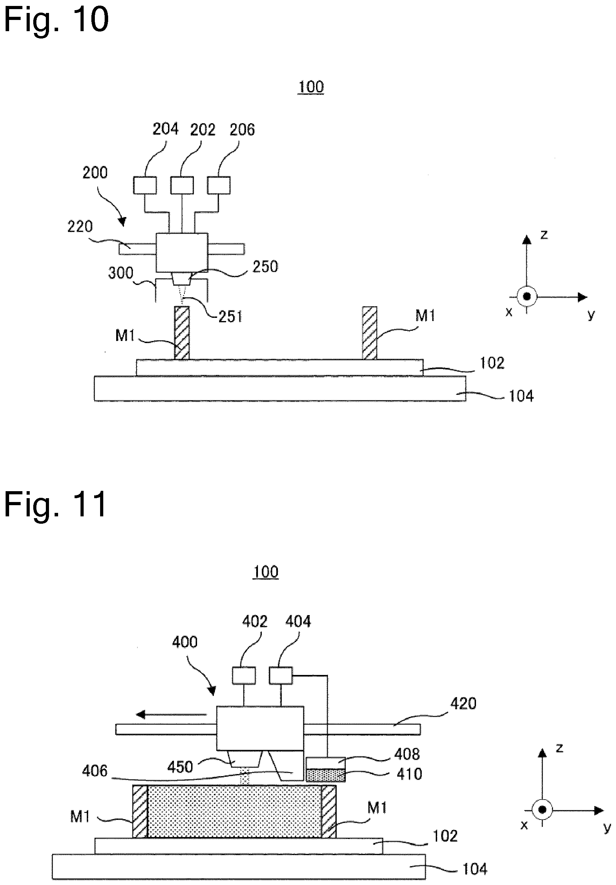

In the fabricating method according to one embodiment, first, the outline M1 of the fabrication target is fabricated (S100). When the outline M1 is fabricated, the DED head 200 is used. Any DED head can be used for the DED head 200, and any DED head 200 disclosed herein can be used or another DED head other than the DED head 200 disclosed herein may be used. Fig. 10 is a side view schematically illustrating a state when the AM apparatus 100 is fabricating the outline M1. When the outline M1 is fabricated using the DED head 200 disclosed herein, while the material powder and the carrier gas are being supplied through the second passage 254 of the DED nozzle 250, a fabrication point is irradiated with the laser 251 through the first passage 252. During the fabrication, the shield gas is supplied to the fabrication point through the third passage 256. For the carrier gas and the shield gas, for example, an argon gas as the inert gas can be used. Using the inert gas for the carrier gas and using the shield gas ensure inhibiting the oxidation of the fabricated object, and thus, ensure stable fabrication.

After the outline M1 of the fabrication target is fabricated, the powder material is supplied inside the outline M1 (S102). The supply of the powder material is performed using the above-described powder supply head 400. Fig. 11 is a side view schematically illustrating a state when the powder material is supplied inside the outline M1. In one embodiment, the material powder and the inert gas heavier than the air are simultaneously supplied inside the outline M1 from the material supply nozzle 450 of the powder supply head 400. Since the material powder is supplied with the material supply nozzle 450 being moved, the blade 406 disposed behind the material supply nozzle 450 can smooth the supplied material powder to have a uniform height. Furthermore, the gas supply nozzle 408 and the porous body 410 disposed behind the blade 406 can further smooth the material powder uniformly. Since the material powder and the inert gas heavier than the air are simultaneously supplied from the material supply nozzle 450, the gap in the material powder is filled with the inert gas. Supplying the inert gas heavier than the air from the gas supply nozzle 408 disposed behind the material supply nozzle 450 and the blade 406 when the material powder is supplied from the material supply nozzle 450 ensure covering the uniformly smoothed material powder with the inert gas.

After the material powder is supplied inside the outline M1 of the fabrication target, an upper surface of the supplied material powder is fabricated (S 104). The fabrication of the upper surface of the supplied material powder ensures fabricating the upper lid M2 that bridges the gap in the outline M1. In the embodiment, only a superficial layer of the material powder supplied inside the outline M1 is fabricated to fabricate the upper lid M2, and the supplied material powder remains below the upper lid M2. The fabrication of the upper surface of the material powder can be performed using the DED head 200 disclosed herein. Fig. 12 is a side view schematically illustrating a state when the upper surface of the supplied material powder is fabricated. When the upper surface of the supplied material powder is fabricated, the upper surface of the material powder is irradiated with the laser from the first passage 252 of the DED nozzle 250. However, at this time, the carrier gas or the material powder is not supplied from the second passage 254. The shield gas is also not supplied from the third passage 256. This is to inhibit the carrier gas and the shield gas from the DED nozzle 250 from blowing the material powder supplied in advance away. In one embodiment, the shield gas may be supplied from the third passage 256 of the DED nozzle 250. However, when the shield gas is supplied from the third passage 256 of the DED nozzle 250, the shield gas is supplied at a flow rate that does not blow the material powder supplied in advance away. For example, the shield gas is supplied at a flow rate lower than the flow rate of the shield gas when the outline M1 is fabricated.

On the other hand, when the upper surface of the material powder is fabricated, the inert gas is supplied from the gas supply ports 310 (see, for example, Fig. 3) of the cover 300, and thus, the peripheral areas of the distal end of the DED nozzle 250 and the fabrication point are covered with the inert gas. Therefore, the oxygen concentration at the fabrication point can be maintained low. Additionally, since the gas is not directly sprayed on the supplied material powder, the material powder can be inhibited from being blown away. In one embodiment, as illustrated in Fig. 3, the gas introduced from the gas supply ports 310 of the cover 300 is guided toward the DED nozzle main body 259 by the gas supply passage 314. Since the gas is guided into the cover 300 with the gas heading in a direction parallel to a fabrication surface, the material powder supplied in advance can be inhibited from being blown away.

Note that, when the fabrication of the upper surface of the material powder is started for fabricating the upper lid M2, it is preferred that a portion of the outline M1 at a boundary between the outline M1 and the material powder is partially melted to form a melt pool, and then, the laser is moved in the direction of the material powder. This makes it easy for the melt of the material powder to connect to the fusion of the portion of the outline M1, thereby easily achieving stable fabrication. When the fabrication of the upper surface of the material powder is terminated, that is, when the upper surface of the material powder is fabricated and the upper lid M2 portion is combined with the outline M1 on an opposite side, similarly, the portion of the outline M1 at the boundary between the outline M1 and the material powder is partially melted to form a melt pool, and then, the laser is moved in the direction of the material powder to ensure obtaining an effect similar to that at the start.

After the upper surface of the material powder is fabricated and the upper lid M2 is completed, further fabrication is performed thereon as necessary to complete the whole fabrication. Finally, the material powder remaining without being fabricated is removed, and thus, the fabricated object M internally having the cavity as exemplarily illustrated in Fig. 13 can be obtained. Generally, when a structure internally having a cavity is fabricated by an AM method, a support member that supports the upper lid M2 portion is used for fabricating the portion of the upper lid M2. However, with the above-described method, the material powder is supplied inside the outline M1 to play a role of the support member, and therefore, the structure internally having the cavity can be fabricated by the AM method without using the support member. Generally, the DED nozzle is sometimes configured to be movable to any position and at any angle with a robot mechanism. With the AM apparatus and the fabricating method according to the above-described embodiments, the configuration that allows the DED nozzle 250 to move along the perpendicular three axes ensures fabricating the structure internally having the cavity, and no complicated robot is necessary for the moving mechanism of the DED nozzle 250.

While in the above-described embodiment, the DED head 200 is used for fabrication, PBF may be used in a part of the fabrication process in another embodiment. In one embodiment, the AM apparatus 100 may include a PBF head for additionally performing the PBF in the DED head 200. All or a part of the above-described outline M1 does not have to be fabricated by the AM method. For example, a component which is already molded by another method may be used as the outline M1, or the outline M1 may be formed by processing a component which is already molded by another method, by the AM method.

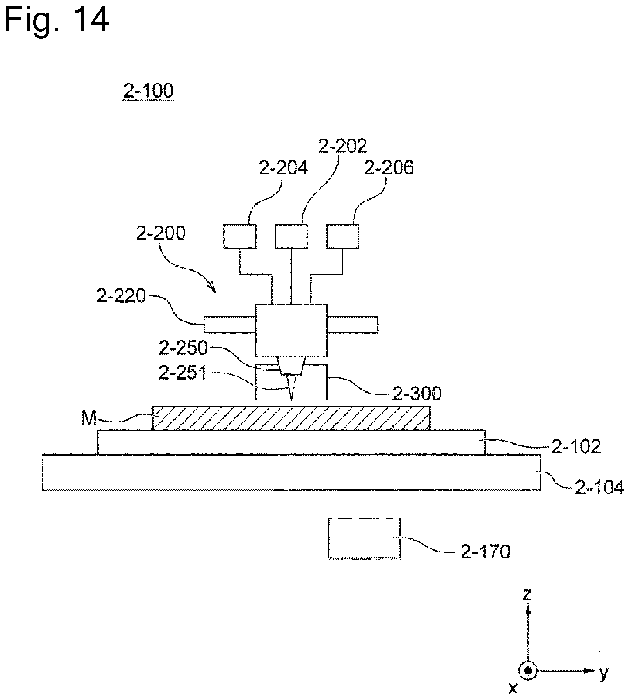

Fig. 14 is a drawing schematically illustrating an AM apparatus for manufacturing a fabricated object according to one embodiment. As illustrated in Fig. 14, an AM apparatus 2-100 includes a baseplate 2-102. On the baseplate 2-102, the fabricated object M is to be fabricated. The baseplate 2-102 can be a plate formed of any material that can support the fabricated object M. In one embodiment, the baseplate 2-102 is disposed on an XY-stage 2-104. The XY-stage 2-104 is the stage 2-104 movable in perpendicular two directions (x-direction, y-direction) on a horizontal surface. Note that the XY-stage 2-104 may be coupled to a lift mechanism movable in a height direction (z-direction). In one embodiment, the XY-stage 2-104 is not necessary.

In one embodiment, as illustrated in Fig. 14, the AM apparatus 2-100 includes a DED head 2-200. The DED head 2-200 is connected to a laser source 2-202, a material powder source 2-204, and a gas source 2-206. The DED head 2-200 has a DED nozzle 2-250. The DED nozzle 2-250 is configured to inject a laser, material powder, and a gas from the laser source 2-202, the material powder source 2-204, and the gas source 2-206. In one embodiment, as illustrated in Fig. 14, a cover 2-300 is mounted on the DED nozzle 2-250. The cover 2-300 is configured to surround a peripheral area of an injection port of the DED nozzle 2-250.

Any DED head can be employed for the DED head 2-200, and for example, a known DED head can be used. The DED head 2-200 is coupled to a moving mechanism 2-220, and thus, is configured to be movable. Any mechanism can be employed for the moving mechanism 2-220, and for example, a mechanism that can move the DED head 2-200 along a certain axis, such as a rail, may be employed, or the moving mechanism 2-220 may be configured of a robot that can move the DED head 2-200 to any position and in any direction. As one embodiment, the moving mechanism 2-220 can be configured to allow the DED head 2-200 to move along perpendicular three axes.

The AM apparatus 2-100 according to one embodiment has a control device 2-170 as illustrated in Fig. 14. The control device 2-170 is configured to control operations of various kinds of operational mechanisms of the AM apparatus 2-100, such as the DED head 2-200 and various kinds of operational mechanisms described above. The control device 2-170 can be configured of a general computer or a specialized computer.

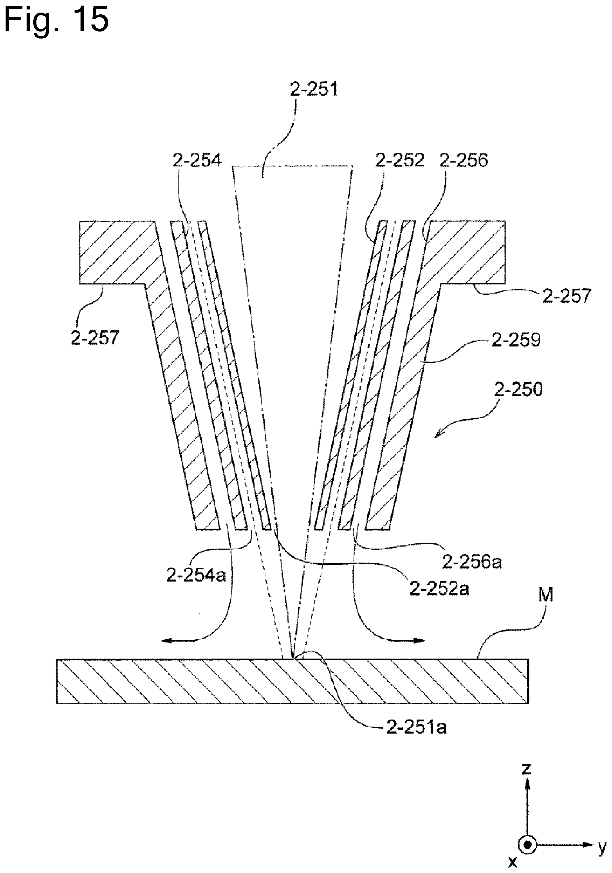

Fig. 15 is a drawing schematically illustrating a cross-sectional surface of the DED nozzle 2-250 according to one embodiment. The DED nozzle 2-250 according to the illustrated embodiment includes a DED nozzle main body 2-259 in a truncated cone shape as a whole. The DED nozzle 2-250 according to the illustrated embodiment includes a laser passage 2-252 through which a laser 2-251 passes in the center of the DED nozzle main body 2-259. The laser that has passed through the laser passage 2-252 is discharged from a laser port 2-252a of the DED nozzle main body 2-259. The DED nozzle main body 2-259 includes a powder passage 2-254 through which the material powder and a carrier gas for transporting the material powder pass outside the laser passage 2-252. The material powder that has passed through the powder passage 2-254 is discharged from a powder port 2-254a. Furthermore, the DED nozzle main body 2-259 includes a shield gas passage 2-256 through which a shield gas passes outside the powder passage 2-254. The shield gas that has passed through the shield gas passage 2-256 is discharged from a gas port 2-256a.

The powder passage 2-254 is configured to converge the material powder discharged from the DED nozzle 2-250 to a position substantially identical to a position of a focal point 2-251a of the laser 2-251. Note that, in Fig. 15, the flow of the material powder and the carrier gas is indicated by dashed lines. The carrier gas can be an inert gas, such as an argon gas and a nitrogen gas. It is more preferred to use the argon gas, which is heavier than the air, for the carrier gas. Note that using the inert gas for the carrier gas ensures inhibiting a molten pool formed of the molten material powder from being oxidized by covering the molten pool with the inert gas. However, the flow of the carrier gas discharged from the powder port 2-254a sometimes entrains the air surrounding the carrier gas. Therefore, the DED nozzle 2-250 illustrated in Fig. 15 supplies the shield gas at a low speed from the shield gas passage 2-256 disposed outside the powder passage 2-254 from which the powder material and the carrier gas are discharged to ensure inhibiting the surrounding air from being entrained. Inhibiting the surrounding air (in particular, oxygen) from being entrained by the carrier gas ensures suppressing the generation of a metal oxide film during fabricating and forming a molten pool with excellent wettability. In Fig. 15, the flow of the shield gas is indicated by arrows. Note that the shield gas can be a gas of a kind the same as that of the carrier gas.

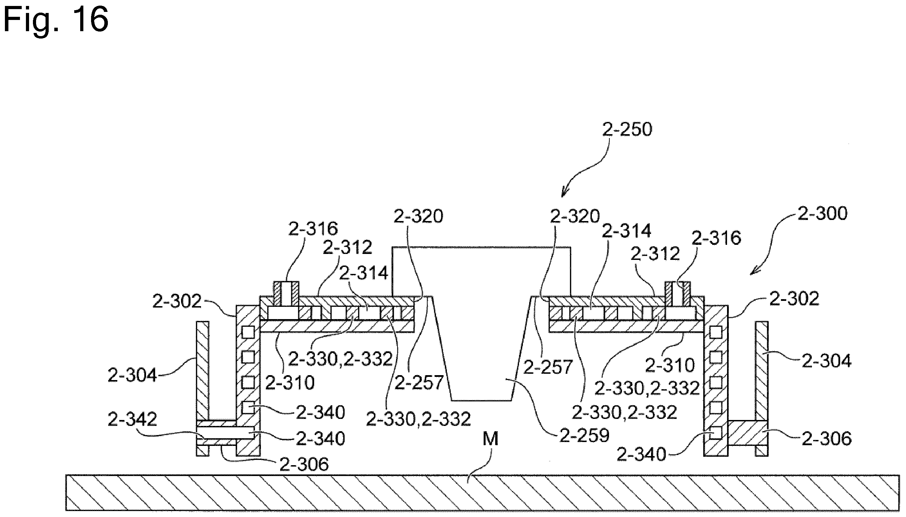

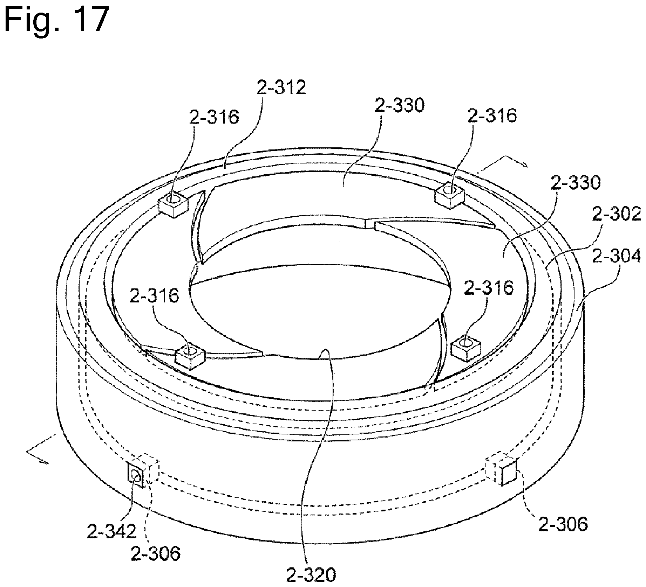

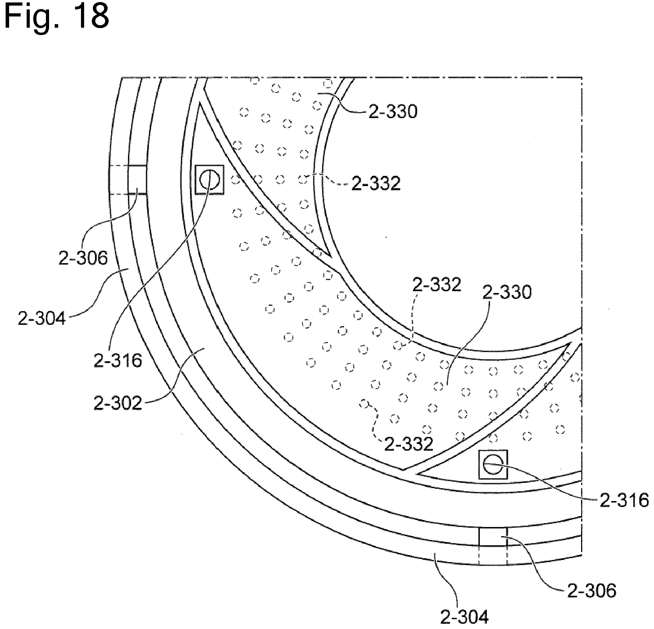

Fig. 16 is a drawing schematically illustrating a cross-sectional surface of the cover 2-300 mounted on the DED nozzle 2-250 according to one embodiment. Fig. 17 is a perspective view of the cover 2-300 illustrated in Fig. 16, viewed from obliquely above. Fig. 18 is a top view of a part of the cover 2-300 illustrated in Fig. 16, viewed from above.

As illustrated in Figs. 16 and 17, the cover 2-300 includes an inner cover 2-302 and an outer cover 2-304. The inner cover 2-302 is in an approximately cylindrical shape, and the inner cover 2-302 has an opened lower side. The inner cover 2-302 is disposed so as to surround the laser port 2-252a, the powder port 2-254a, and the gas port 2-256a of the DED nozzle 2-250. The outer cover 2-304 is disposed so as to surround the inner cover 2-302 at an interval, and is in an approximately cylindrical shape with a diameter larger than that of the inner cover 2-302. The outer cover 2-304 also has an opened lower side similarly to the inner cover 2-302.

The inner cover 2-302 and the outer cover 2-304 are coupled with coupling members 2-306. The coupling member 2-306 is a projection extending outward from the inner cover 2-302. Such projections fit to depressed portions formed on the outer cover 2-304, and thus, the inner cover 2-302 is coupled to the outer cover 2-304.

In the embodiment illustrated in Fig. 16, the cover 2-300 includes a first upper cover 2-310 and a second upper cover 2-312. The first upper cover 2-310 is coupled to an upper end portion of the inner cover 2-302. Note that the inner cover 2-302 and the first upper cover 2-310 may be an integral structural body or may be a coupled body of those formed as different members. The second upper cover 2-312 is disposed above the first upper cover 2-310.

The first upper cover 2-310 and the second upper cover 2-312 are provided with a center hole 2-320 for the nozzle main body 2-259 of the DED nozzle 2-250 to pass through. As illustrated in Fig. 16, the center hole 2-320 is larger than the diameter of the nozzle main body 2-259, and a side surface of the nozzle main body 2-259 does not contact with the first upper cover 2-310 or the second upper cover 2-312. As illustrated in Fig. 16, the nozzle main body 2-259 has a shoulder part 2-257 engaged with the second upper cover 2-312, and thus, the cover 2-300 can be positioned with respect to the DED nozzle 2-250 such that a distal end of the DED nozzle 2-250 is disposed inside the cover 2-300 without causing the side surface of the nozzle main body 2-259 to be in contact with the first upper cover 2-310 or the second upper cover 2-312.

Between the first upper cover 2-310 and the second upper cover 2-312, a gas supply passage 2-314 is defined. The second upper cover 2-312 is provided with gas supply ports 2-316 for supplying a purge gas to the gas supply passage 2-314. The gas supply port 2-316 is disposed near the outside of the second upper cover 2-312, that is, near the inner cover 2-302. The purge gas supplied from the gas supply ports 2-316 passes through the gas supply passage 2-314 and flows toward the DED nozzle 2-250 as a whole. Since there is a clearance between the center hole 2-320 of the first upper cover 2-310 and the second upper cover 2-312 and the side surface of the nozzle main body 2-259 as described above, the purge gas that has passed through the gas supply passage 2-314 is supplied toward the side surface of the nozzle main body 2-259, and the purge gas is supplied inside the space surrounded by the inner cover 2-302 and the first upper cover 2-310.

Note that the purge gas supplied from the gas supply ports 2-316 can be an inert gas, such as an argon gas and a nitrogen gas. It is more preferred to use the argon gas, which is heavier than the air, for the purge gas. As the purge gas supplied from the gas supply ports 2-316, a gas of a kind the same as those of the carrier gas and the shield gas described above can be used.

In one embodiment, the gas supply passage 2-314 includes a lattice structure layer 2-330. In one embodiment, the lattice structure layer 2-330 includes a plurality of columns 2-332 disposed in the gas supply passage 2-314. In the embodiment illustrated in Fig. 16, the plurality of columns 2-332 are the columns 2-332 in a columnar shape extending from the first upper cover 2-310 toward the second upper cover 2-312. In one embodiment, the first upper cover 2-310 including the plurality of columns 2-332 is fabricated by the AM method or any other method. In one embodiment, the second upper cover 2-312 including the plurality of columns 2-332 may be fabricated by the AM method or any other method. Alternatively, the lattice structure layer 2-330 including the plurality of columns 2-332 may be fabricated by any method including the AM method as a member different from the first upper cover 2-310 and the second upper cover 2-312.

In one embodiment, the plurality of columns 2-332 are disposed so as to be sparse in a side of the inlet of the gas supply passage 2-314 and dense in a side of the exit. For example, as illustrated in Fig. 18, disposing a plurality of rows of the plurality of columns 2-332 arranged in a radius direction ensures the structure in which the columns 2-332 are dense inside the radius direction as the exit side of the gas supply passage 2-314 and the columns 2-332 are sparse outside the radius direction where the gas supply ports 2-316 are disposed. While in the embodiment illustrated in Fig. 18, a cross-sectional surface of the column 2-332 is in a circular shape, the column 2-332 can have a cross-sectional shape in any shape, such as a polygonal shape including a square and a triangle, or a cross shape, as another embodiment.

In the above-described embodiment, since the gas supply passage 2-314 includes the lattice structure layer 2-330, the purge gas supplied from the gas supply ports 2-316 passes through the gas supply passage 2-314 with the purge gas being diffused in the lattice structure layer 2-330, and is slowly supplied toward the DED nozzle 2-250 from the center hole 2-320 of the first upper cover 2-310 and the second upper cover 2-312. Therefore, while the flow rate of the purge gas is appropriately decreased, the cover 2-300 can decrease the oxygen concentration in the fabrication position.

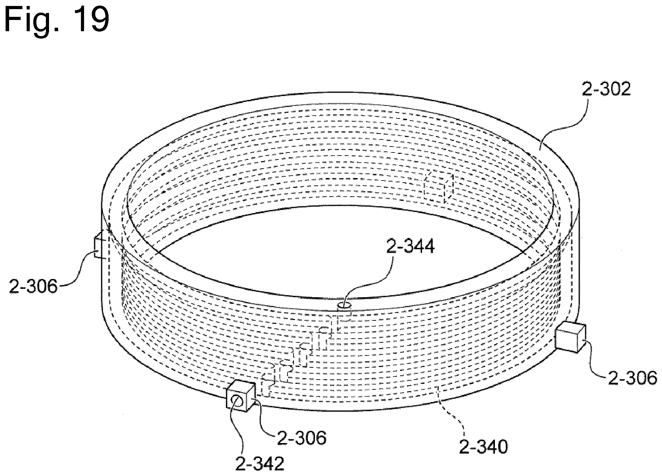

In one embodiment, the cover 2-300 includes a cooling mechanism for cooling the cover 2-300. Fig. 19 is a perspective view illustrating the inner cover 2-302 alone. In one embodiment, as illustrated in Fig. 16, the inner cover 2-302 includes a refrigerant conduit 2-340 for internally flowing a refrigerant. The refrigerant conduit 2-340 extends in a circumferential direction in the inner cover 2-302 in a cylindrical shape. The cover 2-300 includes a refrigerant supply port 2-342 for supplying the refrigerant to the refrigerant conduit 2-340. In the embodiment illustrated in Fig. 16, the refrigerant supply port 2-342 can be an opening formed on one of the above-described coupling members 2-306 that couples the inner cover 2-302 to the outer cover 2-304. The inner cover 2-302 includes a refrigerant discharge port 2-344 for discharging the refrigerant from the refrigerant conduit 2-340. In the embodiment illustrated in Fig. 19, the refrigerant discharge port 2-344 is formed at an upper end of the inner cover 2-302.

The refrigerant supply port 2-342 and the refrigerant discharge port 2-344 are coupled to a refrigerant supply line that includes a heat exchanger, a pump, and the like which are not illustrated. The refrigerant supplied from the refrigerant supply port 2-342 passes through the refrigerant conduit 2-340 formed in the inner cover 2-302, and is discharged from the refrigerant discharge port 2-344. The refrigerant that passes through the refrigerant conduit 2-340 cools the inner cover 2-302.

When fabrication is performed by using the DED nozzle 2-250 including the cover 2-300, reflected energy of the laser with which the fabrication target M is irradiated is received by the DED nozzle 2-250 and the cover 2-300, in particular, the inner cover 2-302. Since the inert gas purges the inside of the cover 2-300, the flow of the gas slows in a peripheral area of the DED nozzle 2-250 within the cover 2-300. Therefore, temperatures of the DED nozzle 2-250 and the cover 2-300 are likely to be increased during fabrication, which sometimes causes unstable fabrication. As with the above-described embodiment, disposing the cooling mechanism in the cover 2-300 ensures suppressing the temperature increase of the DED nozzle 2-250 and the cover 2-300 during fabrication. Note that any liquid including, for example, a pure water, can be used for the refrigerant.

In one embodiment, the refrigerant conduit 2-340 may have a wall surface with unevenness. Providing the unevenness on the wall surface of the refrigerant conduit ensures enlarging a heat exchanging area by the refrigerant, thereby ensuring enhanced usage efficiency of the refrigerant. In one embodiment, the refrigerant conduit 2-340 may include a lattice structure. The lattice structure is only necessary to be able to enlarge the heat exchanging area in the refrigerant conduit 2-340, and for example, the lattice structure may be a plurality of column structures disposed in the refrigerant conduit 2-340 or the inside of the refrigerant conduit 2-340 may have a mesh structure.

In one embodiment, the inner cover 2-302 including the refrigerant conduit 2-340 can be manufactured by the AM method or any other method from a material, such as any metal or plastic.

In one embodiment, the cooling mechanism may use a cooling element, such as a Peltier element, without using the refrigerant or the refrigerant conduit. For example, the Peltier element may be mounted on the inner cover 2-302 and the DED nozzle 2-250.

In one embodiment, a thermometer may be disposed on the DED nozzle 2-250 or the inner cover 2-302. In one embodiment, controlling the cooling mechanism according to a temperature measured by the thermometer ensure maintaining the temperature of the DED nozzle 2-250 or the inner cover 2-302 constant.

From the above-described embodiments, at least the following technical ideas are obtained.
[Configuration 1] According to the configuration 1, there is provided an AM apparatus for manufacturing a fabricated object. The AM apparatus includes a DED nozzle. The DED nozzle includes: a DED nozzle main body; a laser port disposed at a distal end of the DED nozzle main body and a laser passage configured to communicate with the laser port, the laser port being for emitting a laser beam, the laser passage being for allowing the laser beam to pass through the DED nozzle main body; and a powder port disposed at the distal end of the DED nozzle main body and a powder passage configured to communicate with the powder port, the powder port being for emitting a powder material, the powder passage being for allowing the powder material to pass through the DED nozzle main body. The AM apparatus further includes a cover configured to surround a peripheral area of the laser port and the powder port of the DED nozzle, and the cover is configured to have an opened downstream side in an emission direction of the laser beam. The cover includes a gas supply passage for supplying a gas inside the cover, and the gas supply passage is configured to be oriented so as to guide the gas toward the DED nozzle main body.

[Configuration 2] According to the configuration 2, in the AM apparatus of the configuration 1, the cover includes a discharge passage for discharging a gas inside the cover from the cover.

[Configuration 3] According to the configuration 3, in the AM apparatus of the configuration 2, the discharge passage of the cover is configured to be oriented so as to guide a gas upward inside a side wall of the cover.

[Configuration 4] According to the configuration 4, in the AM apparatus of any one of the configurations 1 to 3, the cover includes a second gas supply passage configured to be oriented so as to guide a gas toward a focal point of a laser from a direction perpendicular to the emission direction of the laser.

[Configuration 5] According to the configuration 5, there is provided an AM apparatus for manufacturing a fabricated object. The AM apparatus includes: a baseplate for supporting a fabricated object to be manufactured; a DED nozzle for emitting a powder material and a laser; an X-axis moving mechanism for moving the DED nozzle in an X-axis direction as a horizontal direction; a Y-axis moving mechanism for moving the DED nozzle in a Y-axis direction as a horizontal direction and perpendicular to an X-axis; a powder supply head for supplying the powder material on the baseplate; and a P-axis moving mechanism for moving the powder supply head in a P-axis direction parallel to the X-axis.

[Configuration 6] According to the configuration 6, in the AM apparatus of the configuration 5, the powder supply head includes a powder supply port for simultaneously supplying an inert gas and a powder material. The inert gas is heavier than an air.

[Configuration 7] According to the configuration 7, in the AM apparatus of the configuration 6, the powder supply head includes a gas supply port for supplying an inert gas heavier than an air. The gas supply port is configured to be disposed behind the powder supply port in relation to a moving direction of the powder supply head when the powder material is supplied.

[Configuration 8] According to the configuration 8, in the AM apparatus of the configuration 7, the powder supply head includes a porous body configured to cover the gas supply port.

[Configuration 9] According to the configuration 9, in the AM apparatus of any one of the configurations 5 to 8, the DED nozzle includes: a DED nozzle main body; a laser port disposed at a distal end of the DED nozzle main body and a laser passage configured to communicate with the laser port, the laser port being for emitting a laser beam, the laser passage being for allowing the laser beam to pass through the DED nozzle main body; and a powder port disposed at the distal end of the DED nozzle main body and a powder passage configured to communicate with the powder port, the powder port being for emitting a powder material, the powder passage being for allowing the powder material to pass through the DED nozzle main body. The AM apparatus further includes a cover configured to surround a peripheral area of the laser port and the powder port of the DED nozzle, and the cover is configured to have an opened downstream side in an emission direction of the laser beam. The cover includes a gas supply passage for supplying a gas inside the cover, and the gas supply passage is configured to be oriented so as to guide the gas toward the DED nozzle main body.

[Configuration 10] According to the configuration 10, there is provided a method for manufacturing a fabricated object by an AM method. The method includes: a step of fabricating an outline of a fabrication target by a DED nozzle; a step of supplying a powder material inside the outline fabricated by the DED nozzle; and a step of fabricating an upper surface of the powder material by providing energy on the upper surface of the powder material supplied inside the outline.

[Configuration 11] According to the configuration 11, in the method of the configuration 10, the DED nozzle includes: a DED nozzle main body; a laser port disposed at a distal end of the DED nozzle main body and a laser passage configured to communicate with the laser port, the laser port being for emitting a laser beam, the laser passage being for allowing the laser beam to pass through the DED nozzle main body; a powder port disposed at the distal end of the DED nozzle main body and a powder passage configured to communicate with the powder port, the powder port being for emitting a powder material, the powder passage being for allowing the powder material to pass through the DED nozzle main body; and a gas port disposed at the distal end of the DED nozzle main body and a gas passage configured to communicate with the gas port, and the gas port being for emitting a gas, the gas passage being for allowing the gas to pass through the DED nozzle main body. The method emits an inert gas at a first flow rate from the gas port when an outline of a fabrication target is fabricated, and emits an inert gas at a second flow rate different from the first flow rate from the gas port when an upper surface of the powder material is fabricated.

[Configuration 12] According to the configuration 12, in the method of the configuration 10 or 11, the step of supplying the powder material inside the outline supplies an inert gas inside the outline while supplying the powder material.

[Configuration 13] According to the configuration 13, there is provided an AM apparatus for manufacturing a fabricated object. The AM apparatus includes a DED nozzle. The DED nozzle includes: a DED nozzle main body; a laser port disposed at a distal end of the DED nozzle main body and a laser passage configured to communicate with the laser port, the laser port being for emitting a laser beam, the laser passage being for allowing the laser beam to pass through the DED nozzle main body; and a powder port disposed at the distal end of the DED nozzle main body and a powder passage configured to communicate with the powder port, the powder port being for emitting a powder material, the powder passage being for allowing the powder material to pass through the DED nozzle main body. The AM apparatus further includes a cover configured to surround a peripheral area of the laser port and the powder port of the DED nozzle, and the cover is configured to have an opened downstream side in an emission direction of the laser beam. The cover includes a gas supply passage for supplying a gas inside the cover, and the gas supply passage is configured to be oriented so as to guide the gas toward the DED nozzle main body as a whole. The gas supply passage includes a lattice structure layer.

[Configuration 14] According to the configuration 14, in the AM apparatus of the configuration 13, the lattice structure layer includes a plurality of column structures.

[Configuration 15] According to the configuration 15, in the AM apparatus of the configuration 14, the lattice structure layer has the plurality of column structures disposed so as to be sparse in an inlet side of the gas supply passage and dense in an outlet side.

[Configuration 16] According to the configuration 16, there is provided an AM apparatus for manufacturing a fabricated object. The AM apparatus includes a DED nozzle. The DED nozzle includes: a DED nozzle main body; a laser port disposed at a distal end of the DED nozzle main body and a laser passage configured to communicate with the laser port, the laser port being for emitting a laser beam, the laser passage being for allowing the laser beam to pass through the DED nozzle main body; and a powder port disposed at the distal end of the DED nozzle main body and a powder passage configured to communicate with the powder port, the powder port being for emitting a powder material, the powder passage being for allowing the powder material to pass through the DED nozzle main body. The AM apparatus further includes a cover configured to surround a peripheral area of the laser port and the powder port of the DED nozzle, and the cover is configured to have an opened downstream side in an emission direction of the laser beam. The cover includes a gas supply passage for supplying a gas inside the cover, and the gas supply passage is configured to be oriented so as to guide the gas toward the DED nozzle main body as a whole. The cover includes a cooling mechanism for cooling the cover.

[Configuration 17] According to the configuration 17, in the AM apparatus of the configuration 16, the cooling mechanism of the cover includes a refrigerant conduit for allowing a refrigerant to pass through.

[Configuration 18] According to the configuration 18, in the AM apparatus of the configuration 17, the refrigerant conduit is formed in a side wall of the cover.

[Configuration 19] According to the configuration 19, in the AM apparatus of the configuration 17 or 18, the refrigerant conduit has an uneven structure on a surface of the refrigerant conduit.

[Configuration 20] According to the configuration 20, in the AM apparatus of any one of the configurations 17 to 19, the refrigerant conduit has a lattice structure.

[Configuration 21] According to the configuration 21, in the AM apparatus of any one of the configurations 16 to 20, the cooling mechanism of the cover includes a Peltier element.

### REFERENCE SIGNS LIST

- 170: control device
- DED200: head
- 202: laser source
- 204: material powder source
- 206: gas source
- 220: moving mechanism
- 222: first rail
- 224: second rail
- DED250: nozzle
- 251: laser
- 252: first passage
- 254: second passage
- 256: third passage
- 259: nozzle main body
- 300: cover
- 310: gas supply port
- 312: gas discharge port
- 314: gas supply passage
- 316: gas discharge passage
- 400: powder supply head
- 402: material supply source
- 404: gas source
- 406: blade
- 408: gas supply nozzle
- 410: porous body
- 420: moving mechanism
- 422: third rail
- 450: material supply nozzle
- 251a: focal point
- 252a: laser port
- 254a: powder port
- 256a: gas port
- 2-100: AM apparatus
- 2-170: control device
- 2-200: DED head
- 2-202: laser source
- 2-204: material powder source
- 2-206: gas source
- 2-250: DED nozzle
- 2-252: laser passage
- 2-254: powder passage
- 2-256: shield gas passage
- 2-257: shoulder part
- 2-259: nozzle main body
- 2-300: cover
- 2-302: inner cover
- 2-304: outer cover
- 2-306: coupling member
- 2-310: first upper cover
- 2-312: second upper cover
- 2-314: gas supply passage
- 2-316: gas supply port
- 2-320: center hole
- 2-330: lattice structure layer
- 2-332: column
- 2-340: refrigerant conduit
- 2-342: refrigerant supply port
- 2-344: refrigerant discharge port
- M: fabrication target
- M1: outline
- M2: upper lid

## Claims

1. An AM apparatus for manufacturing a fabricated object, the AM apparatus comprising
a DED nozzle, wherein
the DED nozzle includes:
a DED nozzle main body;
a laser port disposed at a distal end of the DED nozzle main body and a laser passage configured to communicate with the laser port, the laser port being for emitting a laser beam, the laser passage being for allowing the laser beam to pass through the DED nozzle main body; and
a powder port disposed at the distal end of the DED nozzle main body and a powder passage configured to communicate with the powder port, the powder port being for emitting a powder material, the powder passage being for allowing the powder material to pass through the DED nozzle main body,
the AM apparatus further comprises a cover configured to surround a peripheral area of the laser port and the powder port of the DED nozzle, and the cover is configured to have an opened downstream side in an emission direction of the laser beam, and
the cover includes a gas supply passage for supplying a gas inside the cover, and the gas supply passage is configured to be oriented so as to guide the gas toward the DED nozzle main body.

2. The AM apparatus according to claim 1, wherein
the cover includes a discharge passage for discharging a gas inside the cover from the cover.

3. The AM apparatus according to claim 2, wherein
the discharge passage of the cover is configured to be oriented so as to guide a gas upward inside a side wall of the cover.

4. The AM apparatus according to any one of claims 1 to 3, wherein
the cover includes a second gas supply passage configured to be oriented so as to guide a gas toward a focal point of a laser from a direction perpendicular to the emission direction of the laser.

5. An AM apparatus for manufacturing a fabricated object, the AM apparatus comprising:
a baseplate for supporting a fabricated object to be manufactured;
a DED nozzle for emitting a powder material and a laser;
an X-axis moving mechanism for moving the DED nozzle in an X-axis direction as a horizontal direction;
a Y-axis moving mechanism for moving the DED nozzle in a Y-axis direction as a horizontal direction and perpendicular to an X-axis;
a powder supply head for supplying the powder material on the baseplate; and
a P-axis moving mechanism for moving the powder supply head in a P-axis direction parallel to the X-axis.

6. The AM apparatus according to claim 5, wherein
the powder supply head includes a powder supply port for simultaneously supplying an inert gas and a powder material, the inert gas being heavier than an air.

7. The AM apparatus according to claim 6, wherein
the powder supply head includes a gas supply port for supplying an inert gas heavier than an air, and the gas supply port is configured to be disposed behind the powder supply port in relation to a moving direction of the powder supply head when the powder material is supplied.

8. The AM apparatus according to claim 7, wherein
the powder supply head includes a porous body configured to cover the gas supply port.

9. The AM apparatus according to any one of claims 5 to 8, wherein
the DED nozzle includes:
a DED nozzle main body;
a laser port disposed at a distal end of the DED nozzle main body and a laser passage configured to communicate with the laser port, the laser port being for emitting a laser beam, the laser passage being for allowing the laser beam to pass through the DED nozzle main body; and
a powder port disposed at the distal end of the DED nozzle main body and a powder passage configured to communicate with the powder port, the powder port being for emitting a powder material, the powder passage being for allowing the powder material to pass through the DED nozzle main body,
the AM apparatus further comprises a cover configured to surround a peripheral area of the laser port and the powder port of the DED nozzle, and the cover is configured to have an opened downstream side in an emission direction of the laser beam, and
the cover includes a gas supply passage for supplying a gas inside the cover, and the gas supply passage is configured to be oriented so as to guide the gas toward the DED nozzle main body.

10. A method for manufacturing a fabricated object by an AM method, the method comprising:
a step of fabricating an outline of a fabrication target by a DED nozzle;
a step of supplying a powder material inside the outline fabricated by the DED nozzle; and
a step of fabricating an upper surface of the powder material by providing energy on the upper surface of the powder material supplied inside the outline.

11. The method according to claim 10, wherein
the DED nozzle includes:
a DED nozzle main body;
a laser port disposed at a distal end of the DED nozzle main body and a laser passage configured to communicate with the laser port, the laser port being for emitting a laser beam, the laser passage being for allowing the laser beam to pass through the DED nozzle main body;
a powder port disposed at the distal end of the DED nozzle main body and a powder passage configured to communicate with the powder port, the powder port being for emitting a powder material, the powder passage being for allowing the powder material to pass through the DED nozzle main body; and
a gas port disposed at the distal end of the DED nozzle main body and a gas passage configured to communicate with the gas port, the gas port being for emitting a gas, the gas passage being for allowing the gas to pass through the DED nozzle main body, wherein
the method emits an inert gas at a first flow rate from the gas port when an outline of a fabrication target is fabricated, and emits an inert gas at a second flow rate different from the first flow rate from the gas port when an upper surface of the powder material is fabricated.

12. The method according to claim 10 or 11, wherein
the step of supplying the powder material inside the outline supplies an inert gas inside the outline while supplying the powder material.

13. An AM apparatus for manufacturing a fabricated object, the AM apparatus comprising
a DED nozzle, wherein
the DED nozzle includes:
a DED nozzle main body;
a laser port disposed at a distal end of the DED nozzle main body and a laser passage configured to communicate with the laser port, the laser port being for emitting a laser beam, the laser passage being for allowing the laser beam to pass through the DED nozzle main body; and
a powder port disposed at the distal end of the DED nozzle main body and a powder passage configured to communicate with the powder port, the powder port being for emitting a powder material, the powder passage being for allowing the powder material to pass through the DED nozzle main body,
the AM apparatus further comprises a cover configured to surround a peripheral area of the laser port and the powder port of the DED nozzle, and the cover is configured to have an opened downstream side in an emission direction of the laser beam, and
the cover includes a gas supply passage for supplying a gas inside the cover, and the gas supply passage is configured to be oriented so as to guide the gas toward the DED nozzle main body as a whole, the gas supply passage including a lattice structure layer.

14. The AM apparatus according to claim 13, wherein
the lattice structure layer includes a plurality of column structures.

15. The AM apparatus according to claim 14, wherein
the lattice structure layer has the plurality of column structures disposed so as to be sparse in an inlet side of the gas supply passage and dense in an outlet side.

16. An AM apparatus for manufacturing a fabricated object, the AM apparatus comprising
a DED nozzle, wherein
the DED nozzle includes:
a DED nozzle main body;
a laser port disposed at a distal end of the DED nozzle main body and a laser passage configured to communicate with the laser port, the laser port being for emitting a laser beam, the laser passage being for allowing the laser beam to pass through the DED nozzle main body; and
a powder port disposed at the distal end of the DED nozzle main body and a powder passage configured to communicate with the powder port, the powder port being for emitting a powder material, the powder passage being for allowing the powder material to pass through the DED nozzle main body,
the AM apparatus further comprises a cover configured to surround a peripheral area of the laser port and the powder port of the DED nozzle, and the cover is configured to have an opened downstream side in an emission direction of the laser beam,
the cover includes a gas supply passage for supplying a gas inside the cover, and the gas supply passage is configured to be oriented so as to guide the gas toward the DED nozzle main body as a whole, and
the cover includes a cooling mechanism for cooling the cover.

17. The AM apparatus according to claim 16, wherein
the cooling mechanism of the cover includes a refrigerant conduit for allowing a refrigerant to pass through.

18. The AM apparatus according to claim 17, wherein
the refrigerant conduit is formed in a side wall of the cover.

19. The AM apparatus according to claim 17 or 18, wherein
the refrigerant conduit has an uneven structure on a surface of the refrigerant conduit.

20. The AM apparatus according to any one of claims 17 to 19, wherein
the refrigerant conduit has a lattice structure.

21. The AM apparatus according to any one of claims 16 to 20, wherein
the cooling mechanism of the cover includes a Peltier element.
